(19) Europäisches Patentamt
European Patent Office
Office européen des brevets

(11) **EP 1 514 799 B1**

(12) **EUROPÄISCHE PATENTSCHRIFT**

(45) Veröffentlichungstag und Bekanntmachung des Hinweises auf die Patenterteilung:
**24.01.2007 Patentblatt 2007/04**

(51) Int Cl.:
***B64G 1/36*** *(2006.01)*     ***B64G 1/28*** *(2006.01)*

(21) Anmeldenummer: **04020693.0**

(22) Anmeldetag: **01.09.2004**

(54) **Verfahren zur Lagebestimmung eines Raumfahrzeuges mit Hilfe eines Richtungsvektors und einer Gesamtdrallmessung**

Method for attitude determination of spacecraft using a direction vector and a total momentum measurement

Procédé de détermination d'attitude d'un véhicule spatial en utilisant un vecteur directionel et la mesure de l'inertie totale

(84) Benannte Vertragsstaaten:
**DE FR GB IT**

(30) Priorität: **15.09.2003 DE 10342866**

(43) Veröffentlichungstag der Anmeldung:
**16.03.2005 Patentblatt 2005/11**

(73) Patentinhaber: **Astrium GmbH**
**81663 München (DE)**

(72) Erfinder:
• **Fischer, Horst-Dieter**
**82008 Unterhaching (DE)**
• **Chemnitz, Joachim**
**81739 München (DE)**

(74) Vertreter: **Ulrich, Thomas et al**
**c/o EADS Deutschland GmbH,**
**Patentabteilung**
**81663 München (DE)**

(56) Entgegenhaltungen:
**US-B1- 6 282 467**     **US-B1- 6 311 932**

**Beschreibung**

Die vorliegende Erfindung betrifft ein Verfahren zur Lagebestimmung eines Raumfahrzeuges basierend auf zwei Vektorbestimmungen, wobei Sensordaten und Dralldaten als Ausgangsgrößen zur Lagebestimmung ermittelt werden.

Aus dem Stand der Technik sind Verfahren bekannt, mit denen ein Raumfahrzeug, ausgerüstet mit einem Erdsensor (= Richtungsmessung) und Drallrädern, die einen Drall-Sollwert erzeugen, um alle 3 Achsen stabilisiert werden kann (z. B. Whecon-Prinzip).

All diese Verfahren nutzen die dynamische Kopplung zwischen Rollen und Gieren, hervorgerufen durch den Drall-Sollwert aus, um entweder direkt durch entsprechend gewählte Aktuatoransteuerung (Düsen oder Räder) oder durch Einsatz eines Beobachters zur Ermittlung der fehlenden Lageinformation (in der Regel die Gierlage) das Raumfahrzeug zu stabilisieren.

Hierzu wird beispielhaft auf EP 0 785 132 verwiesen. Dort wird einerseits das Whecon-Prinzip erläutert, andererseits wird ein Verfahren zur Lagebestimmung eines Raumfahrzeuges beschrieben, bei dem eine Entkopplung der einzelnen Momente erfolgt, die auf das Raumfahrzeug einwirken. Es werden dort also Entkopplungsterme bestimmt, um eine Entkopplung der Roll-Gier-Kopplungsterme zu erzielen. Dies stellt jedoch einen relativ hohen Rechenaufwand dar.

Aus US 6,282,467 ist ein System und ein Verfahren zur Bestimmung der Lage eines spinstabilisierten Raumfahrzeuges in einem inertialen Koordinatensystem bekannt. Dabei werden folgende Schritte durchgeführt: Bestimmung einer Drallvektorrichtung in dem inertialen Koordinatensystem auf Basis von Messdaten, insbesondere Sensordaten; Bestimmung einer Drallvektorrichtung in einem körperfesten Koordinatensystem auf Basis bekannter Trägheitsdaten; Bestimmung eines Richtungsvektors aus einachsigen Sensordaten; Bestimmung eines Referenz-Richtungsvektors mit Hilfe eines Ephemeridenmodells; Bestimmung der Lage des Raumfahrzeuges aus den genannten vier Vektoren und Propagation der Lage unter Benutzung von Sensordaten. Dieses Verfahren ist für dreiachsenstabilisierte Raumfahrzeuge nicht anwendbar und erfordert überdies eine relativ große Zahl bekannter Eingangsgrößen und Sensordaten.

Aufgabe der vorliegenden Erfindung ist es daher, ein vereinfachtes und verbessertes Verfahren zur Lagebestimmung eines Raumfahrzeuges, insbesondere eines dreiachsen-stabilisierten Raumfahrzeuges, bereitzustellen. Diese Aufgabe wird gelöst durch die Merkmale der Ansprüche 1 und 5.

Gegenstand der Erfindung ist ein Verfahren zur Lagebestimmung eines Raumfahrzeuges basierend auf der Bestimmung von Richtungsvektoren und Drallvektoren, wobei Sensordaten und Dralldaten als Ausgangsgrößen zur Lagebestimmung ermittelt werden, wobei

als erste Vektorbestimmung eine Messung eines Richtungsvektors in einem körperfesten Koordinatensystem mit Hilfe eines Sensors erfolgt,

als zweite Vektorbestimmung die Bestimmung eines Referenz-Richtungsvektors in einem Referenz-Koordinatensystem auf Basis der Bahnposition des Raumfahrzeuges und eines Orbitmodells erfolgt,

als dritte Vektorbestimmung der Gesamtdrallvektor des Raumfahrzeuges in dem körperfesten Koordinatensystem ermittelt wird,

als vierte Vektorbestimmung der Referenz-Gesamtdrallvektor des Raumfahrzeuges in einem Referenz-Koordinatensystem durch zeitliche Propagation bekannter Anfangswerte des Gesamtdralls des Raumfahrzeuges oder durch zeitliches Nachführen eines Referenzmodells für den Gesamtdrall ermittelt wird und

auf Basis der vier Vektoren eine Bestimmung der Lage des Raumfahrzeuges erfolgt.

Dieses Verfahren ist einfacher als das oben genannte Verfahren aus dem Stand der Technik, da durch die Verwendung der Kenntnis eines Anfangswertes des Gesamtdralls einerseits eine aufwändige Ermittlung von Entkopplungstermen entbehrlich wird und die einzelnen Ermittlungsschritte zur Bestimmung der Lage vereinfacht werden, wie im folgenden noch ausgeführt wird. Insbesondere ist grundsätzlich nur eine einzige einachsige Vektormessung mit Hilfe eines Sensors erforderlich, nämlich zur Messung eines Richtungsvektors in einem körperfesten Koordinatensystem.

Der Gesamtdrall kann beispielsweise als Abweichung gegenüber einem Referenz-Gesamtdrall ermittelt werden. Der Referenz-Gesamtdrall kann einerseits durch zeitliche Propagation bekannter Anfangswerte des Gesamtdralls ermittelt werden. Hierzu ist also eine Messung oder Schätzung des Gesamtdralls zu einem bestimmten Anfangszeitpunkt erforderlich. Es kann aber auch der Referenz-Gesamtdrall durch zeitliches Nachführen eines Referenzmodells für den Gesamtdrall ermittelt werden. Dies entspricht grundsätzlich dem Verfahren der Verwendung eines Beobachters, wie es prinzipiell aus dem Stand der Technik bekannt ist. Der Referenz-Richtungsvektor kann grundsätzlich auch - analog zum Referenz-Gesamtdrall - entweder durch zeitliche Propagation bekannter Anfangswerte des Richtungsvektors oder durch zeitliches Nachführen eines Referenzmodells für den Richtungsvektor ermittelt werden.

Eine spezielle Ausgestaltung des erfindungsgemäßen Verfahrens sieht vor, dass als ein Zwischenschritt zur Lagebestimmung zunächst die Drehgeschwindigkeit oder ein Teil der Drehgeschwindigkeit zwischen einem körperfesten Koordinatensystem und dem Referenz-Koordinatensystem ermittelt wird. Hierbei ist vorgesehen, dass zumindest aus dem Richtungsvektor, dem Referenz-Richtungsvektor und einem aus bekannten Anfangswerten zeitlich propagierten oder mittels eines Referenzmodells zeitlich nachgeführten Gesamtdralls zunächst der Längsraten-Anteil der Drehgeschwindigkeit bzw. des Drehgeschwindigkeitsvektors in Richtung des Richtungsvektors zwischen dem körperfesten Koordinatensystem und dem Referenz-Koordinatensystem ermittelt wird. Der Gesamtdrall kann dabei in einer geeigneten Darstellung verwendet werden, beispielsweise in einem Orbit-Koordinatensystem. Mit Hilfe des Längsraten-Anteils wird der Gesamtdrallvektor im körperfesten Koordinatensystem ermittelt. Auf Basis des Richtungsvektors, des Referenz-Richtungsvektors, des Gesamtdrallvektors und des Referenz-Gesamtdrallvektors wird eine Transformationsmatrix ermittelt, die die Abweichungen der Istlage des körperfesten Koordinatensystems des Raumfahrzeuges von dem die Solllage des körperfesten Koordinatensystems repräsentierenden Referenz-Koordinatensystem beschreibt, d.h. eine Transformationsmatrix der Abweichungen der Istlage des körperfesten Koordinatensystems des Raumfahrzeuges von dem Referenz-Koordinatensystem ermittelt. Das Referenz-Koordinatensystem stellt also die Solllage des körperfesten Koordinatensystems dar. Für diesen Verfahrensschritt wird also wiederum auf den Gesamtdrall zurückgegriffen. Es wird also für die gesamte Lagebestimmung lediglich die Kenntnis über den Richtungsvektor und über den Gesamtdrall benötigt, was das Verfahren wesentlich vereinfacht. Bei dem letzten Verfahrensschritt wird überdies nicht der Gesamtdrall nach Richtung und Betrag benötigt, es genügt allein die Richtung des Gesamtdralls.

Zur Ermittlung des Gesamtdrallvektors im körperfesten Koordinatensystem wird insbesondere zusätzlich zumindest der Richtungsvektor und der Referenz-Richtungsvektors verwendet.

Der Gesamtdrall wird wesentlich dadurch bestimmt, ob das Raumfahrzeug Drallräder aufweist, deren Raddrall eine wesentliche Komponente des Gesamtdralls ausmacht. Das bisher beschriebene Verfahren kann bei einem Raumfahrzeug mit Drallrädern auch ohne eine explizite Messung des Raddralls durchgeführt werden. Es kann dann die Drehgeschwindigkeit bzw. von Anteilen der Drehgeschwindigkeit zusätzlich auf Basis von Schätzwerten oder Messwerten für den Raddrall ermittelt werden. Insbesondere kann damit die Bestimmung des Längsraten-Anteils und die Bestimmung des Gesamtdrallvektors zusätzlich auf Basis des ermittelten Drallvektors von Drallrädern des Raumfahrzeuges erfolgen.

Das vorliegende Verfahren kann besonders dann vorteilhaft durchgeführt werden, wenn die Abweichungen der Istlage von der Solllage klein sind. Dies gilt insbesondere dann, wenn die Winkelabweichungen $\tilde{\varphi}_{BR}$: in der Transformationsmatrix $T^{BR}= I - \tilde{\varphi}_{BR}$ kleiner sind als 0,1 rad.

Ein weiterer Gegenstand der vorliegenden Erfindung ist eine Anordnung zur Lagebestimmung eines Raumfahrzeuges, aufweisend folgende Komponenten:

- eine Einrichtung zur Messung eines Richtungsvektors in einem körperfesten Koordinatensystem,
- eine Einrichtung zur Bestimmung der Bahnposition des Raumfahrzeuges,
- eine Anordnung zur Bestimmung eines Referenz-Richtungsvektors in einem Referenz-Koordinatensystem auf Basis der Bahnposition des Raumfahrzeuges und eines Orbitmodells,
- eine Einrichtung zur Bestimmung eines Gesamtdrallvektors in dem körperfesten Koordinatensystem,
- eine Anordnung zur Bestimmung eines Referenz-Gesamtdrallvektors in dem Referenz-Koordinatensystem und, wobei der Referenz-Gesamtdrallvektor durch zeitliche Propagation bekannter Anfangswerte des Gesamtdralls des Raumfahrzeuges oder durch zeitliches Nachführen eines Referenzmodells für den Gesamtdrall ermittelt wird, und
- eine Einrichtung zur Bestimmung der Lage des Raumfahrzeuges auf Basis der vier Vektoren.

Die genannten Anordnungen können dabei aus einer oder mehreren funktionalen Komponenten bestehen. Eine solche Anordnung dient insbesondere zur Durchführung des o.g. Verfahrens. Es ergeben sich auch hier die bereits o.g. Vorteile und Möglichkeiten.

Eine Weiterbildung der erfindungsgemäßen Anordnung weist zusätzlich auf: eine Einrichtung zur Bestimmung des Längsraten-Anteils der Drehgeschwindigkeit bzw. des Drehgeschwindigkeitsvektors in Richtung des Richtungsvektors zwischen dem körperfesten Koordinatensystem und dem Referenz-Koordinatensystem.

Außerdem kann die erfindungsgemäße Anordnung eine Einrichtung zur Messung oder Schätzung des Drallvektors von Drallrädern des Raumfahrzeuges aufweisen.

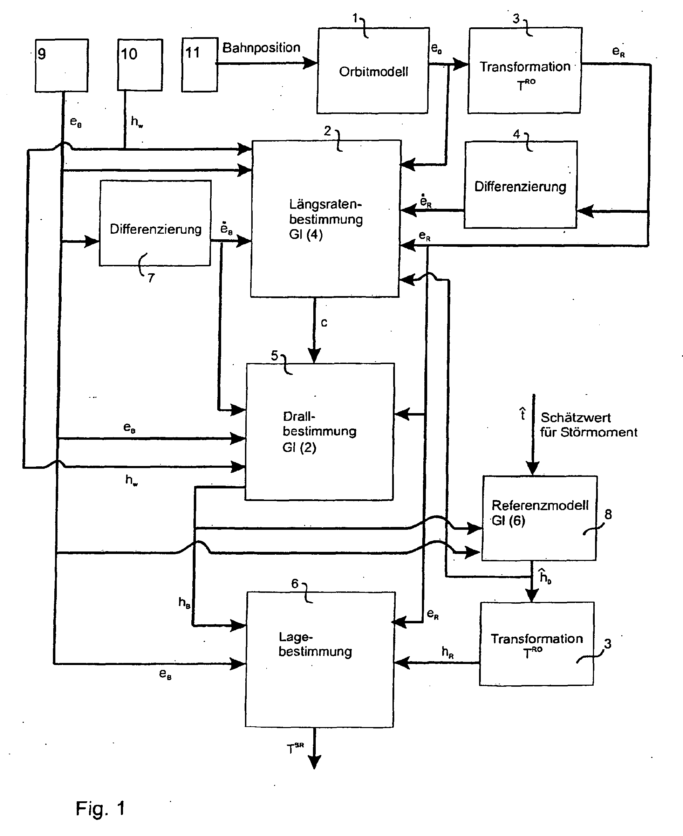

Ein spezielles Ausführungsbeispiel der vorliegenden Erfindung wird nachfolgend anhand der Figur 1 beschrieben.

Es zeigt:

Fig. 1:    Blockschaltbild des erfindungsgemäßen Verfahrensablaufes

Zur Herleitung des Verfahrens werden folgende Beziehungen verwendet

• Drehgeschwindigkeit zwischen körperfestem und Referenzkoordinatensystem

$$(1) \qquad \omega_{BR} = -\tilde{e}_B \dot{e}_B + c e_B + T^{BR} \tilde{e}_R \dot{e}_R$$

mit

| | |
|---|---|
| $e_B = T^{BR} e_R$: | Einheitsvektor (EV) der Richtungsmessung im körperfesten System (d.h. Richtungsvektor, gewonnen aus Richtungsvektormessung) |
| $e_R$: | zugehöriger EV im Referenzkoordinatensystem mit der zusätzlichen Eigenschaft, dass die zugehörige Richtung im Inertialsystem zeitvariabel ist (d.h. Referenz-Richtungsvektor, gewonnen aus Referenz-Richtungsvektormessung) |
| $T^{BR} = I - \tilde{\varphi}_{BR}$: | zu bestimmende Transformationsmatrix kleiner Abweichungen zwischen körperfestem und Referenzkoordinatensystem, entspricht auch der Darstellung der Abweichung des Gesamtdralls vom Referenz-Gesamtdrall |
| $\varphi_{BR}$: | Vektor kleiner Winkel, die die Abweichung zwischen körperfestem und Referenzsystem beschreiben |
| "~": | Kreuzproduktoperation |
| $c = e_B^T \omega_{BR}$: | zu bestimmender Drehgeschwindigkeitsanteil in Richtung von $e_B$, im folgenden genannt "Längsrate" |

- Drallvektor im körperfesten Koordinatensystem

$$(2) \qquad h_B \quad = \quad J_s \, (\omega_{BR} + T^{BR} \, \omega_{RI}) \quad + h_w$$
$$\approx J_s \left[ -\tilde{e}_B \dot{e}_B + c e_B + \tilde{e}_R \dot{e}_R - \tilde{\varphi}_{BR} \left( \omega_{RI} + \tilde{e}_R \dot{e}_R \right) \right] + J_s \omega_{RI} + h_w$$
$$\approx J_s \left( -\tilde{e}_B \dot{e}_B + \tilde{e}_R \dot{e}_R + c e_B \right) \qquad + \qquad h_s \qquad \text{da } \varphi_{BR} \text{ klein}$$

mit

| | |
|---|---|
| $J_s$: | Massenträgheitsmomentenmatrix des Raumfahrzeuges |
| $\omega_{RI}$: | Drehgeschwindigkeit des Referenzsystems gegenüber dem Inertialsystem |
| hw: | in den Drallrädern gespeicherter Drallanteil (= Raddrall) |

Als erstes wird der Drehgeschwindigkeitsanteil c berechnet. Da der Winkel zwischen Mess- und Referenzvektoren unabhängig vom gewählten Koordinatensystem ist, gilt

$$(3) \qquad e_B^T \, h_B = e_R^T \, h_R = e_0^T \, h_0$$

wobei

$$h_R = T^{R0} \, h_0$$

mit

| | |
|---|---|
| $T^{R0}$: | Transformationsmatrix zwischen Referenz- und Orbitsystem; sie beschreibt die Solllage des Raumfahrzeuges und wird i.a. über Biaswerte, die auch zeitvariant sein können, vorgegeben. |
| $h_0$: | als bekannt angenommener Drall des Raumfahrzeuges im Orbitsystem |
| $e_0$: | Messrichtung im Orbitsystem, bekannt aus Orbitdaten |

Aus (3) folgt mit (1) und (2), 3. Zeile sofort

$$(4) \qquad c = \frac{e_0^T h_0 - e_B^T \left( h_s - J_s \widetilde{e}_B \dot{e}_B + J_s \widetilde{e}_R \dot{e}_R \right)}{e_B^T J_s e_B}$$

Da der Term $J_s$ ($\omega_{RI} + \widetilde{e}_R \dot{e}_R$) durch die Wahl des Raddralls klein gegenüber $h_w$ bleibt, ist der Term $J_s \widetilde{\varphi}_{BR}$ ($\omega_{RI} + \widetilde{e}_R \dot{e}_R$) von zweiter Ordnung klein, womit $h_B$ praktisch unabhängig von $\varphi_{BR}$ und somit $T^{BR}$ wird.

Außer der Bestimmung von $h_B$ über c gemäß Gleichung (2), (4) bietet sich alternativ die Verwendung eines Beobachters oder Kalmanfilters an, dass als Messgröße den um den Term mit den unbekannten c reduzierten Vektor $h_B$ benützt. die Gleichungen dafür lauten:

$$(2a) \qquad (aa) h_m = J_s \left( -\widetilde{e}_B \dot{e}_B + \widetilde{e}_R \dot{e}_R \right) + h_S$$

$$(bb) \hat{\omega}_{BI} = J_s^{-1} \left( z - h_w \right)$$

$$(cc) \dot{z} + \widetilde{\hat{\omega}}_{BI} \cdot z = K \left( h_m - z \right)$$

mit

z:   Schätzvektor für $h_B$
K:   Verstärkungsmatrix, z. B. "Kalman"-Verstärkung

In beiden Fällen kann die gesuchte Matrix $T^{BR}$ aus den Vektorpaaren $e_B/e_n$ und $h_B/h_n$ bzw. $z/h_R$ mit einem der allgemein bekannten Verfahren ermittelt werden.

Es liegen damit Lage- und Geschwindigkeitsabweichungen gegenüber dem Referenzsystem vor, womit das Raumfahrzeug in bekannter Weise durch Aufschaltung dieser beiden Anteile auf die Aktuatoren bezüglich des Referenzsystems ausgerichtet werden kann.

Zur Erläuterung des praktischen Vorgehens sei ein erdorientiertes Raumfahrzeug auf einer Kreisbahn betrachtet. Für den Orbitdrall $h_0$ gilt hier die einfache Beziehung

$$(5) \qquad \dot{h}_0 = -\widetilde{\omega}_0 h_0 + t_s^{(0)}$$

mit

$$\omega_0 = \begin{pmatrix} 0 \\ w_0 \\ 0 \end{pmatrix}$$

$t_s^{(0)}$: äußere Momente auf das Raumfahrzeug, ausgedrückt im Orbitsystem

Wie eingangs bereits erwähnt, bieten sich zwei Vorgehensweisen zur Ermittlung von $h_0(t)$ an:

a) Propagation gemäß Gleichung (5): Hierzu ist abschnittsweise optische 3-Achsen Referenz, z. B. aus einem Sonnensensor nötig, um die unbekannten Anteile in $t_s^{(0)}$ (z. B. Solarstörmomente) während dieser Phasen zu schätzen und $h_0$ am Ende dieser Phasen auf einen Anfangswert zu initialisieren

b) Nachführen eines Referenzmodells für $h_0$: Hierfür wird zusätzlich berechnet

$$\dot{\hat{h}}_{01} = -w_0\hat{h}_{03} + K_1\left(h_{03} - \hat{h}_{03}\right) + \hat{t}_1$$

(6)

$$\dot{\hat{h}}_{03} = +w_0\hat{h}_{01} + K_3\left(h_{03} - \hat{h}_{03}\right) + \hat{t}_3$$

$h_{03} = e_B{}^T h_B$:     da $e_0 = e_3$ bei Erdreferenz

$\hat{h}_{oi}$              Schätzung für $h_{0i}$

$K_i$:            Aufschaltwerte, z.B. $K_1 = 3w_0$, $K_3 = 4\,|w_0|$

$\hat{t}_i$:            Schätzwerte für $t_{si}{}^{(0)}$

Gleichung (6) sichert, dass für $t_{si}{}^{(0)} = \hat{t}_i$ die Schätzungen $\hat{h}_{0i}$ gegen $\hat{h}_{0i}$ konvergieren; für die angegebenen Werte von $K_i$ ist dies nach einem Orbit der Fall. Die fehlende 2. Komponente von $\hat{h}_0$ wird berechnet gemäß

$$\hat{h}_{02} = \left(h_B^T h_B - \left(e_B^T h_B\right)^2 - \hat{h}_{01}{}^2\right)^{1/2} \cdot sign\,w_0$$

d. h. der nominale Raddrall $h_w$ wird so gewählt, dass die 2. Komponente seiner Transformation im Orbitsystem das gleiche Vorzeichen wie die Orbitrate $w_0$ hat.

Der wesentliche Vorteil des beschriebenen Verfahrens liegt darin, dass unabhängig von der auch zeitvarianten Sollorientierung gegenüber dem Orbitsystem (z. B. beim sogenannten Yaw-Steering) alle Rechenschritte unverändert bleiben, da nur die Matrix $T^{R0}$ entsprechend gewählt wird. Bei den eingangs erwähnten Verfahren sind dafür umfangreiche Rechnungen für Kompensationsterme oder sogar eine zeitvariable Dynamik für den Beobachter in Kauf zunehmen. Weiterhin können verschiedenartige Sensoren (z. B. Erdsensor, Magnetometer) als Messgeber verwendet werden.

Durch diese Vorteile wird ein Einsatz des Verfahrens in allen Klassen von Raumfahrzeugen (LEO, MEO, GEO) möglich.

Fig. 1 zeigt nun als ein spezielles Ausführungsbeispiel ein Blockschaltbild von Komponenten, die zur Realisierung des hier beschriebenen Verfahrens verwendet werden können:

Aus einer bekannten Bahnposition des Raumfahrzeuges (beispielsweise durch zeitliche Propagation von Anfangswerten für Position und zeitliche Positionsänderung des Raumfahrzeugs, idealerweise unter Berücksichtigung externer Störungen, durch Nachführen eines Bahnmodells oder durch Raumfahrzeug-interne oder externe Positionsmessungen wie GPS), die mit Hilfe einer Bahnpositions-Einrichtung 11 ermittelt wird, wird mit Hilfe eines gespeicherten Orbitmodells in einer ersten Orbitmodell-Einrichtung 1 der Referenz-Einheitsvektor $e_o$ ermittelt und einer Einrichtung zur Längsratenbestimmung 2 zur Bestimmung von c gemäß Gleichung (4), zugeführt. Dieser Einrichtung 2 werden jedoch auch der mittels der bekannten, gespeicherten Transformationsmatrix $T^{RO}$ durch eine Transformations-Einrichtung 3, ins Referenzsystem transformierte Einheitsvektor $e_R$, sowie dessen zeitliche Ableitung, gewonnen über den Differenzierer 4, zugeführt. Der Einheitsvektor $e_R$ wird ferner in das Modul zur Drallbestimmung 5, sowie in das Modul zur Lagebestimmung 6, eingespeist.

Mit Hilfe eines in Fig. 1 dargestellten Sensors 9 (z. B. Erdsensor, Magnetometer) wird der Einheitsvektor $e_B$ bestimmt und den Modulen zur Längsratenbestimmung 2, zur Drallbestimmung 5, sowie zur Lagebestimmung 6, zugeführt. Den beiden erstgenannten Modulen wird ferner die über einen Differenzierer 7, gewonnene zeitliche Ableitung von $e_B$ zugeführt.

Aus Messsignalen einer Messeinrichtung 10 von Drallrädern, in Fig. 1 aus Gründen der Einfachheit nicht dargestellt, wird der Drallvektor der Räder, $h_w$, gewonnen. Dieser wird in die Module zur Längsratenbestimmung 2, sowie zur Drallbestimmung 5, eingespeist. Die in Modul 2 ermittelte Längsrate c wird dem Modul zur Drallbestimmung 5, zugeführt, dessen Ergebnis, $h_B$, wiederum in das Modul zur Lagebestimmung 6, sowie in ein Referenzmodell-Modul für den Orbitdrall 8, eingespeist wird. Diesem Referenzmodell-Modul 8 werden außerdem Schätzwerte i für externe Störmomente zugeführt.

Der Ergebnisvektor des Referenzmodell-Moduls 8, $\hat{h}_0$, wird in das Längsratenbestimmungsmodul 2, zurückgeführt sowie über das in Fig. 1 unten aus Gründen der Anschaulichkeit nochmals dargestellte Modul 3 ins Referenzsystem transformiert und es wird das Ergebnis, nämlich der Gesamtdrallvektor $h_R$ im Referenz-Koordinatensystem, in das Modul zur Lagebestimmung 6 eingespeist. Dieses Modul 6 schließlich ermittelt entsprechend dem o.g. Verfahren aus den zwei ihm zugeführten Vektorpaaren $e_B$, $e_R$, $h_B$, $h_R$ die die Satellitenlage beschreibende Transformationsmatrix $T^{BR}$. Diese Transformationsmatrix beschreibt die Transformation zwischen körperfestem Koordinatensystem und Referenz-Koordinatensystem. Ebenso beschreibt diese Transformationsmatrix die Abweichung des Gesamtdralls von dem Referenz-Gesamtdrall.

**Patentansprüche**

1. Verfahren zur Lagebestimmung eines Raumfahrzeuges basierend auf der Bestimmung von Richtungsvektoren und Drallvektoren, wobei Sensordaten und Dralldaten als Ausgangsgrößen zur Lagebestimmung ermittelt werden, wobei als erste Vektorbestimmung eine Messung eines Richtungsvektors ($e_B$) in einem körperfesten Koordinatensystem mit Hilfe eines Sensors erfolgt,
als zweite Vektorbestimmung die Bestimmung eines Referenz-Richtungsvektors ($e_R$) in einem Referenz-Koordinatensystem auf Basis der Bahnposition des Raumfahrzeuges und eines Orbitmodells erfolgt,
als dritte Vektorbestimmung der Gesamtdrallvektor ($h_B$) des Raumfahrzeuges in dem körperfesten Koordinatensystem ermittelt wird, **dadurch gekennzeichnet, dass**
als vierte Vektorbestimmung der Referenz-Gesamtdrallvektor ($h_R$) des Raumfahrzeuges in einem Referenz-Koordinatensystem durch zeitliche Propagation bekannter Anfangswerte des Gesamtdralls des Raumfahrzeuges oder durch zeitliches Nachführen eines Referenzmodells für den Gesamtdrall ermittelt wird und
auf Basis der vier Vektoren ($e_B$, $e_R$, $h_B$, $h_R$) eine Bestimmung der Lage des Raumfahrzeuges erfolgt.

2. Verfahren nach Anspruch 1,
**dadurch gekennzeichnet,**
**dass** zumindest aus dem Richtungsvektor ($e_B$), dem Referenz-Richtungsvektor ($e_R$) und einem aus bekannten Anfangswerten zeitlich propagierten oder mittels eines Referenzmodells zeitlich nachgeführten Gesamtdralls ($\hat{h}_0$) zunächst der Längsraten-Anteil (c) der Drehgeschwindigkeit ($\omega_{BR}$) in Richtung des Richtungsvektors ($e_B$) zwischen dem körperfesten Koordinatensystem und dem Referenz-Koordinatensystem ermittelt wird,
mit Hilfe des Längsraten-Anteils (c) der Gesamtdrallvektor ($h_B$) im körperfesten Koordinatensystem ermittelt wird und auf Basis auf Basis des Richtungsvektors ($e_B$), des Referenz-Richtungsvektors ($e_R$), des Gesamtdrallvektors ($h_B$) und des Referenz-Gesamtdrallvektors ($h_R$) eine Transformationsmatrix $T^{BR}$ ermittelt wird, die die Abweichungen der Istlage des körperfesten Koordinatensystems des Raumfahrzeuges von dem die Solllage des körperfesten Koordinatensystems repräsentierenden Referenz-Koordinatensystem beschreibt.

3. Verfahren nach Anspruch 2, **dadurch gekennzeichnet, dass** zur Ermittlung des Gesamtdrallvektor ($h_B$) zusätzlich zumindest der Richtungsvektor ($e_B$) und der Referenz-Richtungsvektors ($e_R$) verwendet wird.

4. Verfahren nach Anspruch 2 oder 3, **dadurch gekennzeichnet, dass** die Bestimmung des Längsraten-Anteils (c) und die Bestimmung des Gesamtdrallvektors ($h_B$) zusätzlich auf Basis des gemessenen oder geschätzten Drallvektors ($h_w$) von Drallrädern des Raumfahrzeuges erfolgt.

5. Anordnung zur Lagebestimmung eines Raumfahrzeuges, aufweisend folgende Komponenten:

   eine Einrichtung (9) zur Messung eines Richtungsvektors (eB) in einem körperfesten Koordinatensystem,
   eine Einrichtung (11) zur Bestimmung der Bahnposition des Raumfahrzeuges,
   eine Anordnung (1, 3) zur Bestimmung eines Referenz-Richtungsvektors (eR) in einem Referenz-Koordinatensystem auf der Basis der Bahnposition des Raumfahrzeuges und eines Orbitmodells,
   eine Einrichtung (5) zur Bestimmung eines Gesamtdrallvektors (hB) in dem körperfesten Koordinatensystem,
   eine Anordnung (8, 3) zur Bestimmung eines Referenz-Gesamtdrallvektors (hR) in dem Referenz-Koordinatensystem, **dadurch gekennzeichnet, dass** der Referenz-Gesamtdrallvektor (hR) durch zeitliche Propagation bekannter Anfangswerte des Gesamtdralls des Raumfahrzeuges oder durch zeitliches Nachführen eines Referenzmodells für den Gesamtdrall ermittelt wird und
   eine Einrichtung (6) zur Bestimmung der Lage des Raumfahrzeuges auf der Basis der vier Vektoren (eB, eR, hB, hR).

6. Anordnung nach Anspruch 5, zusätzlich aufweisend eine Einrichtung (2) zur Bestimmung des Längsraten-Anteils (c) der Drehgeschwindigkeit ($\omega_{BR}$) in Richtung des Richtungsvektors ($e_B$) zwischen dem körperfesten Koordinatensystem und dem Referenz-Koordinatensystem.

7. Anordnung nach Anspruch 5 oder 6, zusätzlich aufweisend eine Einrichtung (10) zur Messung oder Schätzung des Drallvektors ($h_w$) von Drallrädern des Raumfahrzeuges.

**Claims**

1. A method for attitude determination of a spacecraft based on determining direction vectors and angular momentum vectors, sensor data and angular momentum data being determined as starting quantities for the attitude determination, wherein

a measurement of a direction vector ($e_B$) in a body frame coordinate system is carried out as a first vector determination with the aid of a sensor,

the determination of a reference direction vector ($e_R$) in a reference coordinate system is carried out as a second vector determination on the basis of the orbital position of the spacecraft and an orbit model,

the total angular momentum vector ($h_B$) of the spacecraft in the body frame coordinate system is determined as a third vector determination, **characterised in that**

the reference total angular momentum vector ($h_R$) of the spacecraft in a reference coordinate system is determined as a fourth vector determination by temporally propagating known initial values of the total angular momentum of the spacecraft or by temporally tracking a reference model for the total angular momentum, and

a determination of the attitude of the spacecraft is carried out on the basis of the four vectors ($e_B$, $e_R$, $h_B$, $h_R$).

2. A method according to Claim 1,
**characterised in that**

the longitudinal rate component (c) of the angular velocity ($\omega_{BR}$) in the direction of the direction vector ($e_B$) between the body frame coordinate system

and the reference coordinate system is initially determined at least from the direction vector ($e_B$), the reference direction vector ($e_R$) and a total angular momentum ($\hat{h}_0$) temporally propagated from known initial values or temporally tracked by means of a reference model,

the total angular momentum vector (he) in the body frame coordinate system is determined with the aid of the longitudinal rate component (c),

and a transformation matrix $T^{BR}$, which describes the deviations of the actual attitude of the body frame coordinate system of the spacecraft from the reference coordinate system representing the setpoint attitude of the body frame coordinate system, is determined on the basis of the direction vector ($e_B$), the reference direction vector ($e_R$), the total angular momentum vector ($h_B$) and the reference total angular momentum vector ($h_R$).

3. A method according to Claim 2, **characterised in that** at least the direction vector ($e_B$) and the reference direction vector ($e_R$) are additionally used for determining the total angular momentum vector ($h_B$).

4. A method according to Claim 2 or 3, **characterised in that** the determination of the longitudinal rate component (c) and the determination of the total angular momentum vector ($h_B$) are additionally carried out on the basis of the measured or estimated angular momentum vector ($h_w$) of momentum wheels of the spacecraft.

5. An arrangement for attitude determination of a spacecraft, comprising the following components:

an instrument (9) for measuring a direction
vector (eB) in a body frame coordinate system,
an instrument (11) for determining the orbital position of the spacecraft,
an arrangement (1, 3) for determining a reference direction vector (eR) in a reference coordinate system on the basis of the orbital position of the spacecraft and an orbit model,
an instrument (5) for determining a total angular momentum vector (hB) in the body frame coordinate system,
an arrangement (8, 3) for determining a reference total angular momentum vector (hR) in the reference coordinate system, **characterised in that** the reference total angular momentum vector (hR) is determined by temporally propagating known initial values of the total angular momentum of the spacecraft or by temporally tracking a reference model for the total angular momentum, and
an instrument (6) for determining the attitude of the spacecraft on the basis of the four vectors (eB, eR, hB, hR).

6. An arrangement according to Claim 5, additionally comprising an instrument (2) for determining the longitudinal rate component (c) of the angular velocity ($\omega_{BR}$) in the direction of the direction vector (eB) between the body frame coordinate system and the reference coordinate system.

7. An arrangement according to Claim 5 or 6, additionally comprising an instrument (10) for measuring or estimating the angular momentum vector ($h_w$) of momentum wheels of the spacecraft.

EP 1 514 799 B1

**Revendications**

1. Procédé de détermination d'attitude d'un engin spatial fondé sur la détermination des vecteurs directionnels et des vecteurs de rotation, selon lequel on détermine des données de capteurs et des données de rotation comme grandeurs de sortie pour déterminer l'attitude, et

- comme première détermination de vecteur on mesure un vecteur directionnel ($e_B$) dans un système de coordonnées solidaire du corps à l'aide d'un capteur,
- comme seconde détermination de vecteur on détermine un vecteur directionnel de référence ($e_R$) dans un système de coordonnées de références fondé sur la position de l'engin spatial sur sa trajectoire et sur un modèle d'orbite,
- comme troisième détermination de vecteur on détermine le vecteur total de rotation ($h_B$) de l'engin spatial dans le système de coordonnées solidaire du corps,

**caractérisé en ce que**
comme quatrième détermination de vecteur on détermine le vecteur total de rotation de référence ($h_R$) de l'engin spatial dans un système de coordonnées de références par propagation dans le temps de valeurs initiales connues de la rotation globale de l'engin spatial ou par asservissement en fonction du temps d'un modèle de référence pour la rotation globale, et
en se fondant sur les quatre vecteurs ($e_B$, $e_R$, $h_B$, $h_R$) on détermine l'attitude de l'engin spatial.

2. Procédé selon la revendication 1,
**caractérisé en ce qu'**
au moins à partir du vecteur directionnel ($E_B$), du vecteur directionnel de référence ($e_R$) et d'une rotation globale ($\hat{h}_0$) propagée dans le temps à partir de valeurs initiales connues ou asservie dans le temps à l'aide d'un modèle de référence, on détermine tout d'abord la composante de vitesse longitudinale (c) dans la vitesse de rotation ($\omega_{BR}$) dans la direction du vecteur directionnel ($e_B$) entre le système de coordonnées solidaire du corps et le système de coordonnées de référence,
à l'aide de la composante de vitesse longitudinale (c) on détermine le vecteur global de rotation ($h_B$) dans le système de coordonnées solidaire du corps, et
en s'appuyant sur le vecteur directionnel ($e_B$), le vecteur directionnel de référence ($e_R$), le vecteur global de rotation ($h_B$) et le vecteur de référence de rotation globale ($h_R$), on détermine une matrice de transformation ($T^{BR}$) qui décrit les différences entre l'attitude réelle du système de coordonnées solidaire du corps pour l'engin spatial et le système de coordonnées de référence représentant l'attitude de consigne du système de coordonnées solidaire du corps.

3. Procédé selon la revendication 2,
**caractérisé en ce que**
pour déterminer le vecteur global de rotation ($h_B$) on utilise en plus le vecteur directionnel ($e_B$) et le vecteur directionnel de référence ($e_R$).

4. Procédé selon la revendication 2 ou la revendication 3,
**caractérisé en ce qu'**
on détermine la composante de vitesse longitudinale (c) et le vecteur global de rotation ($h_B$) en plus en se fondant sur le vecteur de rotation ($h_w$) mesuré ou évalué pour les roues de giration de l'engin spatial.

5. Dispositif pour déterminer l'attitude d'un engin spatial comprenant les éléments suivants :

- une installation (9) pour mesurer un vecteur directionnel ($e_B$) dans un système de coordonnées solidaire du corps,
- une installation (11) pour déterminer l'attitude de l'engin spatial sur sa trajectoire,
- un dispositif (1, 3) pour déterminer un vecteur directionnel de référence ($e_R$) dans un système de coordonnées de référence en se fondant sur la position de l'engin spatial sur la trajectoire et sur un modèle d'orbite,
- une installation (5) pour déterminer un vecteur global de rotation ($h_B$) dans le système de coordonnées solidaire du corps,
- un dispositif (8, 3) pour déterminer un vecteur global de rotation de référence ($h_R$) dans le système de coordonnées de référence,

**caractérisé en ce que**

9

le vecteur global de rotation de référence ($h_R$) est déterminé par la propagation dans le temps de valeurs initiales connues de la rotation globale de l'engin spatial, ou par l'asservissement en fonction du temps d'un modèle de référence de la rotation globale, et

une installation (6) détermine l'attitude de l'engin spatial en se fondant sur les quatre vecteurs ($e_B$, $e_R$, $h_B$, $h_R$).

6. Dispositif selon la revendication 5,
**caractérisé en ce qu'**
il comporte en outre une installation (2) pour déterminer la composante de vitesse longitudinale (c) et de la vitesse de rotation ($\omega_{BR}$) dans la direction du vecteur directionnel ($e_B$) entre le système de coordonnées solidaire du corps et le système de coordonnées de référence.

7. Dispositif selon la revendication 5 ou 6,
**caractérisé en ce qu'**
il comporte en plus une installation (10) pour mesurer ou évaluer le vecteur de rotation ($h_W$) des roues de rotation de l'engin spatial.

Fig. 1